(19) Europäisches Patentamt

European Patent Office

Office européen des brevets

(11) Veröffentlichungsnummer: **0 258 331 B1**

(12) **EUROPÄISCHE PATENTSCHRIFT**

(45) Veröffentlichungstag der Patentschrift: **12.08.92**

(21) Anmeldenummer: **87901348.0**

(22) Anmeldetag: **24.02.87**

(86) Internationale Anmeldenummer:
**PCT/DE87/00063**

(87) Internationale Veröffentlichungsnummer:
**WO 87/05110 (27.08.87 87/19)**

(51) Int. Cl.⁵: **G01N 21/67**

(54) **GLIMMENTLADUNGSLAMPE SOWIE DEREN VERWENDUNG.**

(30) Priorität: **24.02.86 DE 3605911**

(43) Veröffentlichungstag der Anmeldung:
**09.03.88 Patentblatt 88/10**

(45) Bekanntmachung des Hinweises auf die
Patenterteilung:
**12.08.92 Patentblatt 92/33**

(84) Benannte Vertragsstaaten:
**AT BE CH DE FR GB IT LI LU NL SE**

(56) Entgegenhaltungen:
**DE-A- 2 806 212**
**DE-A- 3 213 660**

**Patent Abstracts of Japan, vol. 7, no. 241
(P-232)(1386) 26 October 1983, & JP A
58127150**

**Journal of Applied Physics, vol. 50, no. 12,
1979, (New York, US), R. WILLIAMSON et al.:
"Glow-discharge optical spectroscopy measurement of B-, Ge, and Mg-implanted
GaAs", pp 8019-8024, see page 8019, figure
1; pages 8019, 8020**

(73) Patentinhaber: **GESELLSCHAFT ZUR FÖRDE-
RUNG DER SPEKTROCHEMIE UND ANGE-
WANDTEN SPEKTROSKOPIE E.V.
Bunsen-Kirchhoff-Str. 11
W-4600 Dortmund 1(DE)**

(72) Erfinder: **KO,Jae,Bak;
Inst.f.Spektrochem.u.angew.Spektroskopie
e.V.;
Bunsen-Kirchhoff-Str.11 D-4600
Dortmund1(DE)**

(74) Vertreter: **Münich, Wilhelm, Dr. et al
Kanzlei Münich, Steinmann, Schiller Willibaldstrasse 36/38
W-8000 München 21(DE)**

# Beschreibung

## Technisches Gebiet

Die Erfindung betrifft eine Glimmentladungslampe nach dem Oberbegriff des Patentanspruchs 1 sowie deren Verwendung gemäß Patentanspruch 9.

## Stand der Technik

Glimmentladungslampen haben eine breite Anwendung bei der Metallanalyse durch Atom-Emissionsspektroskopie (AES) gefunden. Dabei wird eine zu untersuchende elektrisch leitfähige Probe gegen eine Anode geschaltet, wobei sich im Raum zwischen Kathode und Anode ein zur Glimmentladung befähigtes Gas, bevorzugt ein Edelgas unter niedrigem Druck, befindet. Das Auftreten der Glimmentladung hängt dabei vom Verhältnis sowohl der Brennspannung, des Stromes, als auch des Gasdruckes zwischen Kathode und Anode ab. Die Strahlung der Glimmentladung wird durch ein üblicherweise oberhalb der Anode angeordnetes Fenster beobachtet und aus ihrer spektralanalytischen Zerlegung werden Informationen über den Gehalt bestimmter Elemente in der Probe gewonnen.

Aus der deutschen Patentanmeldung DE-A- 34 29 765 ist eine Glimmentladungslampe bekannt, bei der ein innerer Gasraum von einem Trägergas durchströmt wird und bei angelegter Spannung zwischen Anode und Kathode im Gasraum eine Glimmentladung entsteht. Die Probe ist als Teil der Kathode geschaltet, während ein durchsichtiger Gehäuseteil zur Spektralanalyse des Glimmentladungslichtes benutzt wird. Die Anode ist dabei z.T. in einen festen nicht leitenden Körper eingebettet und liegt auf Hochspannungspotential, während sich die Probe - als Kathode - auf Null-Potential befindet.

Durch das Einbetten der Anode in einen festen nicht leitenden Körper kann die Kurzschlußfestigkeit des Gehäuses der Glimmlampe auf einfachste Art und Weise gewährleistet werden. Ferner ist es bei diesem Stand der Technik möglich, die Anode auf Hochspannung zu legen und die Kathode auf Null-Potential, wodurch ein leichtes und gefahrloses Auswechseln der Proben ermöglicht wird. Durch das nicht leitende Material im Gasraum wird erreicht, daß sich die Wände des Entladungsraumes schnell auf die Temperatur im Gasraum einstellen, da elektrisch nicht leitendes Material in der Regel auch schlecht wärmeleitfähig ist. Durch diese bekannte Anordnung wird eine schnelle Einstellung konstanter Meßbedingungen und reproduzierbarer Ergebnisse gewährleistet.

Die aus der DE-A- 34 29 765 bekannte Vorrichtung stellt zwar bereits einen erheblichen Fortschritt gegenüber bekannten Glimmentladungslampen dar, nichts destoweniger ist aber die herkömmliche Glimmlampe nur für die übliche Anwendung in der Atom-Emissionsspektroskopie geeignet.

Eine Glimmentladungslampe mit einem eine oder mehrere Gaszufuhr- und Vakuumabsaugöffnungen aufweisenden Kammerkörper aus isolierendem Material ist ferner aus "Patent Abstract of Japan, Bd. 7, Nr. 241 (P-232)[1386], 26. Oktober 1983" bekannt. Diese Glimmentladungslampe weist einen sich in Richtung der Anode erweiternden, durch die Kammerkörper-Innenwände seitlich begrenzten Gasraum auf, dessen größter Durchmesser in etwa auf Anodenhöhe liegt und dessen kleinster Durchmesser dem Untersuchungsabschnitt der zu untersuchenden Probe entspricht. Die Probe ist am Kathodenende des Kammerkörpers angeordnet und schließt den inneren Gasraum dichtend ab.

Bei dieser bekannten Glimmentladungslampe ist es nicht möglich, das negative Glimmlicht von der Seite her zu erfassen.

Glimmentladungslampen anderer Gattung sind aus Journal of Applied Physics, Bd. 50, Nr. 12, 1979, Seite 8019 bis 8024 und der DE-A- 32 13 660 bekannt.

Auch diese Glimmentladungslampen eignen sich nicht für eine seitliche Erfassung des negativen Glimmlichtes.

## Darstellung der Erfindung

Der Erfindung liegt deshalb die Aufgabe zugrunde, die bekannten Glimmentladungslampen unter Erniedrigung der Nachweisgrenze in der Atom-Emissionsspektroskopie derart weiterzubilden, daß auch den Einsatz anderer spektroskopischer Methoden, mit denen angeregte Atome, wie sie in einer Glimmentladung vorliegen, untersucht werden können, zu ermöglichen.

Eine erfindungsgemäße Lösung dieser Aufgabe ist mit ihren Weiterbildungen in den Patentansprüchen gekennzeichnet.

Der Erfindung liegt der Gedanke zugrunde, die Glimmentladung auch durch ein seitliches Fenster zu beobachten. Dadurch, daß im Gegensatz zu bisher bekannten Glimmentladungslampen nun erstmals Seitenfenster vorgesehen sind, welche auch eine seitliche Beobachtung des Glimmlichtes, ggf. nach optischer Anregung durch einfallende Strahlung, ermöglichen, kann die Glimmentladungslampe nun auch für andere spektroskopische Verfahren, wie beispielsweise die Atom-Fluoreszenz-Spektroskopie o.ä., eingesetzt werden. Es ist auch möglich, am seitlichen Fenster einen Lichtleiter o.ä. anzuschließen, um die austretende Strahlung ggf. räumlich weiter entfernt zu untersuchen.

Durch das seitlich angebrachte Fenster ist erstmals eine Untersuchung von von der Probe emittierten Strahlen ohne Anregungsstrahlen möglich.

Dabei ist es vorteilhaft, wenn der Kammerkörper eine im Bereich des negativen Glimmlichtes austretende erste Gaszufürleitung, eine oberhalb der ersten Gaszuführleitung angeordnete erste Vakuumleitung, eine zweite, zwischen der ersten Gaszuführleitung und unterhalb der im Kammerkörper eingebetteten Anode angeordnete zweite, ggf. verschließbare Gaszuführleitung sowie eine dritte, zwischen Anode und Abschlußteil angeordnete Gaszuführleitung aufweist.

Dabei kann es sein, daß an dem Abschlußteil eine weitere Leitung vorgesehen ist, an die sowohl Vakuum als auch die Gaszufuhr angeschlossen werden kann.

Durch die geometrisch ausgewogene Verteilung der Durchführungen für Vakuum und der Gaszuführungen kann eine gleichmäßige Druckverteilung oberhalb der Probe und damit eine planparallele Probenabtragung erzielt werden, wie es insbesondere für Oberflächen- und Tiefenprofilanalysen erwünscht ist.

Durch die verschiedenartige Anordnung der Leitungen ist es auch möglich, die Ausbildung des Probenkraters den Analysenanforderungen - Oberflächenanalyse, Tiefenanalyse oder an bestimmte Materialgegebenheiten - rauhe, unebene Oberfläche mit hohen Ablösungsenergien oder geringen Ablösungsenergien - anzupassen.

Vorteilhafterweise kann ein auswechselbares Einsatzteil im die Probe haltenden Kathodenteil angeordnet sein, das durch seine innere Öffnung den dem Vakuum bzw. der Abtragung von Materialien ausgesetzten Probenabschnitt umgibt. Dieser Ausschnitt kann durch die Wahl des Einsatzteils in beliebger Weise gesteuert werden, je nachdem, ob kleine Abschnitte der Probe untersucht werden sollen oder ob eine möglichst flächige Abtragung erfolgen soll.

Durch die direkte Zerstäubung der Probe und durch die erfindungsgemäße Anordnung der Fenster kann das Reservoir freier Atome für Verfahren der Atom-Absorptions-Spektroskopie, Atom-Fluoreszenz-Spektrskopie und LEI ("Laser-enhanced Ionisation") eingesetzt werden. Die planparallele Zerstäubung der Probe macht es möglich, die oben erwähnten Verfahren nicht nur für Durchschnitts-, sondern auch zum ersten Mal für Oberflächen- und Tiefenprofilanalyse erfolgreich einzusetzen.

## Kurze Beschreibung der Zeichnung

Die Erfindung wird nachstehend anhand eines Ausführungsbeispiels unter Bezugnahme auf die Zeichnung näher beschrieben, in der zeigen:

Fig. 1 die wesentlichen Teile einer erfindungsgemäßen Glimmentladungslampe, entlang der Verbindungslinie Anode/Kathode geschnitten;

Fig. 2 den probenseitigen Teil der Glimmentladungslampe der Fig. 1, entlang der Vakuumleitung geschnitten;

Fig. 3 zwei vergrößerte Ausschnitte möglicher bevorzugter Ausführungsformen des Probenbereiches einer erfindungsgemäßen Glimmentladungslampe, sowie

Fig. 4 eine weitere bevorzugte Ausführungsform der erfindungsgemäßen Glimmentladungslampe im Bereich des Abschlußteils, mit abgeschirmter Anode.

## Beschreibung eines Ausführungsbeispiels

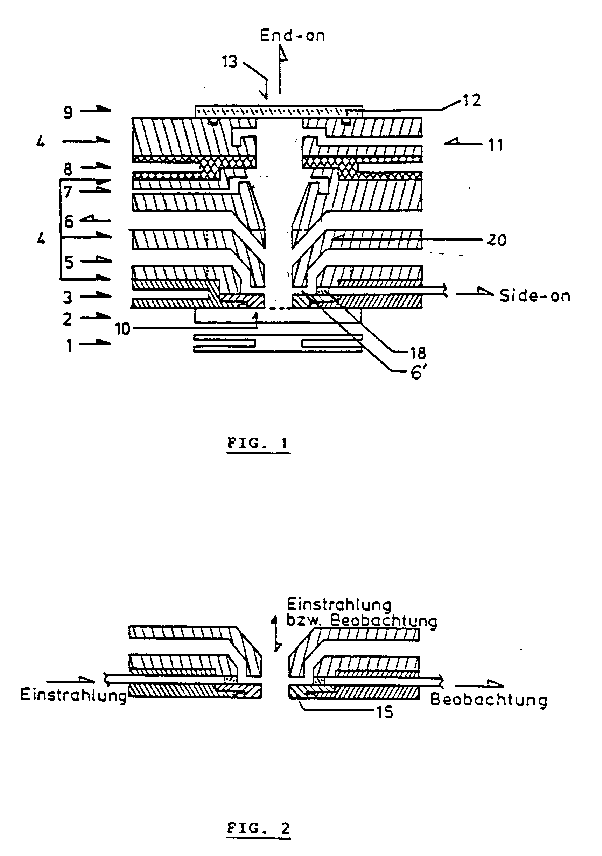

Wie in Fig. 1 gezeigt, weist die erfindungsgemäße Glimmentladungslampe eine Probe 2 auf, die mittels einer Dichtung, beispielsweise einer 0-Ringdichtung, an einem Kathodenteil 3 dichtend befestigt ist. Der Kathodenteil schließt sich an den aus nicht leitendem Material, bevorzugt einem Keramik-Material, hergestellten Kammerkörper 4 an, in dem eine erste Gaszuführleitung 5, die kurz oberhalb der Probe endet, eine erste Vakuumleitung 6, die oberhalb der ersten Gaszuführleitung angeordnet ist, eine zweite Gaszuführleitung 7, bevorzugt mit geringerem Querschnitt als die erste Gaszuführleitung, eine im Kammerkörper 4 eingebettete Anode 8 sowie eine dritte Gaszuführleitung 11 vorgesehen sind, die Argon oberhalb der Anode, unterhalb des Abschlußteils 12 zuführt. Sämtliche Leitungen münden in einen Gasinnenraum. Im Kammerkörper 4 ist eine Durchgangsöffnung, der Gasinnenraum GR, ausgebildet, der sich bei dieser bevorzugten Ausführungsform stumpfkegelförmig in Richtung Anode, ausgehend von der Probe 2, vergrößert. Die Anode besitzt eine Innenöffnung, die mit der Achse des Gasimmenraumes fluchtet. Der Gasinnenraum (GR) ist durch ein Abschlußteil 12, welches beispielsweise ein Fenster sein kann, und das ggf. eine weitere Leitung zur Gaszufuhr oder Vakuumanschluß aufweisen kann, abgeschlossen und wird bei der hier dargestellten Ausführungsform ebenfalls über 0-Ringe abgedichtet.

Ferner ist im Kathodenteil mindestens ein seitliches Beobachtungsfenster 18 ausgebildet, durch das das sich oberhalb der Probe entwickelnde negative Glimmlicht im Gasinnenraum beobachtet werden kann.

Gegebenenfalls kann ein weiteres Beobachtungsfenster, welches auch zum Einleiten von Strahlen, beispielsweise Anregungsstrahlung im UV- (ultraviolett) oder VIS-(sichtbar) Bereich eingesetzt werden kann, vorgesehen sein. Das Einleiten von Strahlung zur Anregung der im negativen Glimmlicht vorhandenen Atome kann auch durch das Abschlußfenster 12 erfolgen und seitlich beobachtet werden. Bei einer bevorzugten Ausführungsform wird das Beobachtungsfenster 18 durch einen Lichtleiter ersetzt, der den Anschluß an ein relativ weit entferntes Spektrometer ermöglicht.

Wie in Fig. 2 gezeigt, kann auch eine fluchtende Anordnung einer Einstrahlungs- und einer Beobachtungsöffnung vorgesehen sein.

Bevorzugt wird der dem Nachweisverfahren ausgesetzte Oberflächenbereich der Probe durch ein Einsatzteil 15, wie in Fig. 2 gezeigt, begrenzt. Dabei ist es möglich, die Innenöffnung des Probenteils gemäß dem angewendeten Verfahren bzw. der Art des erwünschten Analysenergebnisses zu verändern.

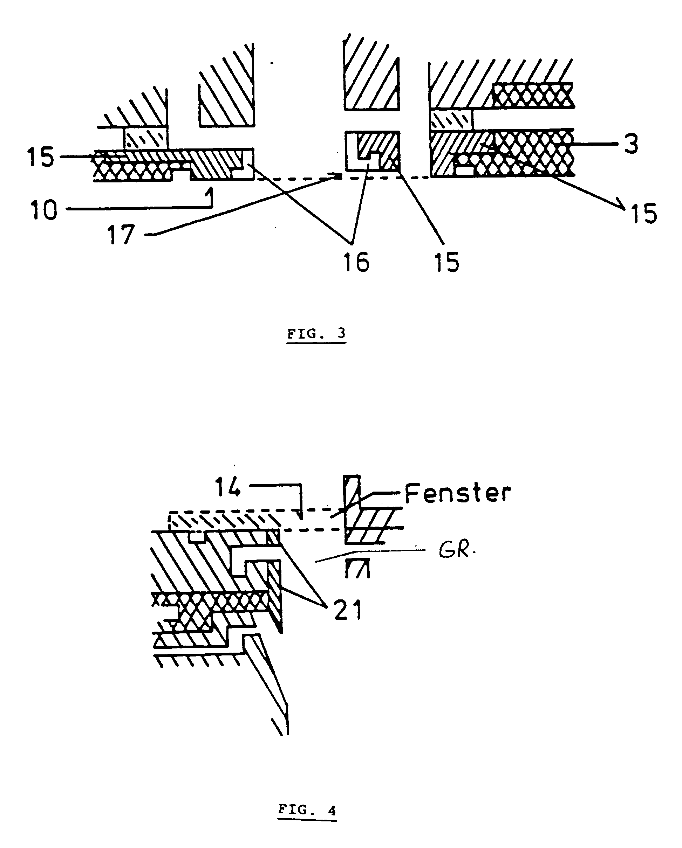

In Fig. 3 ist nun der Probenbereich zweier Ausführungsformen der erfindungsgemäßen Glimmlampe repräsentativ vergrößert dargestellt (links und rechts unterschiedlich), wobei das Einsatzteil 15 mit einer Öffnung 17 für eine Betriebsweise versehen ist, bei welcher ein weiteres Teilerteil 16 vorgesehen ist, das auswechselbar gestaltet ist. In dem Teilerteil 16 ist eine Öffnung 17 vorgesehen, durch welche ein Teil oder die Gesamtmenge des Trägergases, je nach Einsatzzweck, in die Kammer einströmen kann. Dabei beträgt der Abstand zwischen der Stirnfläche des Einsatzteiles 15 vor der Probe beispielsweise 0,01 bis 0,5 mm, bevorzugt weniger als 0,2 mm.

Bei einer weiteren bevorzugten Ausführungsform der erfindungsgemäßen Glimmlampe ist, wie in Fig. 4 gezeigt, die Anode 8 vom Gasinnenraum durch eine Trennwand 21 abgeschirmt. Die Verfahrensweise mit abgeschirmter Anode ist bei einigen bevorzugten Anwendungen der erfindungsgemäßen Glimmentladungslampe vorteilhaft. Es ist bevorzugt, wenn an der Anode 8 und der Probe 2 keine metallischen oder leitenden Teile den Gasinnenraum begrenzen.

Die gesamte beschriebene Kammer wird üblicherweise durch ein dünnes Metallblech auf Null-Potential abgeschirmt, dieses wurde in den Figuren aufgrund verbesserter Übersichtlichkeit nicht dargestellt.

Nachstehend werden bevorzugte Betriebsweisen der erfindungsgemäßen Glimmentladungslampe mit unterschiedlichen Proben beschrieben.

Im Normalfall wird die erfindungsgemäße Glimmentladungslampe durch Beschickung der Öffnungen 5 und 11 mit Argon und Anlegen eines Vakuums an die Öffnung 6 bei Hochspannung betrieben (Probe als Kathode auf Null-Potential, Anode auf Hochspannungs-Potential).

Es gibt aber auch Proben wie beispielsweise Reinstaluminium oder auch sehr rauhe Proben, bei denen es ggf. vorteilhaft ist, das Trägergas durch die Öffnungen 11 und 17 einzuführen.

Für besonders hohe Anforderungen kann es nützlich sein, wenn die Edelgaszufuhrleitungen 5, 7 und 17 geschlossen sind und Edelgas nur durch die Öffnung 11 eintritt, während über die Öffnung 6 Vakuum gezogen wird.

Letztere Betriebsweise eignet sich insbesondere für Proben aus Aluminium-Silizium-Legierungen, die sehr schlecht abbaubar und schlecht leitend sind, wie es allgemein bei hochschmelzenden Stoffen mit hoher Bindungsenergie auftritt.

Falls es erwünscht ist, eine geringe Abbaurate der Probe zu erzielen, ist es günstig, die Edelgaszuführung 11 wie auch die Leitung 17 zu schließen und Edelgas lediglich über die Leitungen 5 und 7 zuzuführen, während über die Öffnung 6 Vakuum gezogen wird.

Für andere analytische Verfahren kann es günstig sein, Vakuum an der Öffnung 17 anzulegen und über die Öffnungen 5, 7 oder 11 Edelgas zuzuführen, wobei ggf. über die Öffnung 6 noch zusätzlich Vakuum gezogen werden kann.

Durch die erfindungsgemäße Ausgestaltung der Glimmentladungslampe ist es erstmals möglich, nicht nur end-on, sondern auch side-on zu messen, wobei das negative Glimmlicht sich in einem Abstand von 0,5 bis 20 mm über der Probe ausbildet. Die Öffnungen 5 im Kammerkörper sind etwa in Plasmaebene vorgesehen.

Durch die Strahlungsfenster 18 auf etwa gleicher Höhe wie das Plasma ist es möglich, dieses genau zu beobachten und ggf. die in der Glimmentladung vorhandenen Ionen/Atome durch Strahlungseinwirkung anzuregen und deren Emissionsspektren zu beobachten:

Bei der Atom-Absorptions-Spektroskopie oder der Atom-Fluoreszenz-Spektroskopie können als Primär-Strahlungsquellen in Verbindung mit der erfindungsgemäßen Glimmentladungslampe die bekannten Lichtquellen verwendet werden. Insbesondere können Lichtquellen verwendet werden, die Licht mit schmaler Linienbreite und hoher Kohärenz aussenden. Die Linienbreite des von der Lichtquelle emittierten Lichts ist bei der AAS und der AFS typischerweise um eine Größenordnung geringer als die Breite der Absorptionslinie: Beispielsweise kann die Linienbreite des Lichts der Lichtquelle zwischen 5 und 500 MHz, bevorzugt zwischen 10 und 50 MHz betragen. Dabei werden bevorzugt als Lichtquellen durchstimmbare Temperaturstabilisierte Halbleiter-Laser verwendet.

Vorstehend ist die Erfindung anhand von Ausführungsbeispielen ohne Beschränkung des allgemeine Erfindungsgedankens beschrieben worden. In jedem Falle ermöglicht die erfindungsgemäße Glimmentladungslampe es erstmals, durch die Abänderung der Höhe der Strahlungsführung über der Probe und damit der relevanten Entladungsschicht die analytische Leistungsfähigkeit in einem bisher nicht gekannten Maße zu steigern. Durch die erfindungsgemäße Anordnung ist es möglich, die Gasentladungen bei vermindertem Druck nicht nur für das optische emissionsspektroskopische Verfahren (OES), sondern vielmehr auch für andere bewährte Verfahren, wie Atomabsorption (AAS), Atomfloreszenz-Spektroskopie (AFS) und das optogalvanische Verfahren (LEI) analytisch einzusetzen. Die erfindungsgemäße Glimmentladungslampe erniedrigt beim OES die Grenzen der Spurenanalyse. Durch die erfindungsgemäße Anordnung ist es erstmals möglich, Glimmentladungslampen auch bei anderen Verfahren außer beim OES einzusetzen.

Dabei sind innerhalb des allgemeinen Erfindungsgedankens - eine seitliche Fensteröffnung vorzusehen -selbstverständlich die verschiedensten Modifikationen möglich: Beispielsweise kann die Probe auch auf Hochspannungspotential liegen.

**Patentansprüche**

1. Glimmentladungslampe mit einem eine oder mehrere Gaszufuhr- und Vakuumabsaugöffnung(en) aufweisenden Kammerkörper aus isolierendem Material, mit einem sich in Richtung der Anode erweiternden, durch die Kammerkörperinnenwände seitlich begrenzten Gasraum, dessen größter Durchmesser in etwa auf Anodenhöhe liegt und dessen kleinster Durchmesser dem Untersuchungsabschnitt der zu untersuchenden Probe entspricht und mit einer am Kathodenende des Kammerkörpers angeordneten Probe und einer im Kammerkörper aufgenommenen Anode, sowie mit einem am Ende des Kammerkörpers angeordneten, ggf. als Beobachtungsfenster ausgebildeten Abschlußteil,
**gekennzeichnet** durch die Kombination folgender Merkmale:
 - es ist mindestens eine seitlich im Kammerkörper (4), in etwa in Höhe des negativen Glimmlichtes angeordnete Fensteröffnung (18) für ein weiteres Beobachtungsfenster vorgesehen,
 - die Probe (2) schließt den inneren Gasraum am Kathodenende dichtend ab,
 - der Kammerkörper (4) weist eine erste im Bereich des negativen Glimmlichtes, nahe der Probe sowie die dort vorhandene Fensteröffnung (18) unmittelbar überströmende, ggf. schließbare Gaszuführleitung (5) auf, und
 - der Kammerkörper (4) weist über der Gaszuführleitung (5) eine Vakuumleitung (6) auf.

2. Glimmentladungslampe nach Anspruch 1, dadurch **gekennzeichnet**, daß eine zweite, zwischen der ersten Gaszuführleitung (5) und unterhalb der im Kammerkörper (4) eingebettete Anode (8) angeordnete zweite, ggf. schließbare Gaszuführleitung (7) sowie eine dritte, zwischen Anode (8) und Abschlußteil (12) angeordnete, gegebenenfalls schließbare Gaszuführleitung (11) aufweist.

3. Glimmentladungslampe nach Anspruch 1 oder 2, dadurch **gekennzeichnet**, daß das Abschlußteil (12) eine ggf. verschließbare Anschlußleitung für Vakuum oder Gaszuführung aufweist.

4. Glimmentladungslampe nach einem der Ansprüche 1 bis 3, dadurch **gekennzeichnet**, daß die Probe (2) an einem an den Kammerkörper (4) anschließenden Kathodenteil (3) angeordnet ist.

5. Glimmentladungslampe nach Anspruch 4, dadurch **gekennzeichnet**, daß ein aus nicht leitendem Material gefertigtes ggf. auswechselbares Einsatzteil (15) mit einer dem Untersuchungsabschnitt der Probe entsprechenden Innenöffnung in der Durchgangsöffnung des Kathodenteils (3) angeordnet ist, wobei die Innenöffnung des Einsatzteils (15) wahlweise rund, rechteckig, rechtwinklig, mit abgerundeten Ecken, elliptisch oder dgl. gewählt werden kann.

6. Glimmentladungslampe nach einem der Ansprüche 1 bis 5, dadurch **gekennzeichnet**, daß die Anode (8) durch eine Trennwand (21) vom Gasinnenraum (GR) abgeschirmt ist.

7. Glimmentladungslampe nach Anspruch 5, dadurch **gekennzeichnet**, daß im Einsatzteil (15) ein Teilerteil (16) aus nicht leitendem Material mit einer Gaszuführöffnung (17) eingesetzt ist.

8. Glimmentladungslampe nach einem der Ansprüche 1 bis 7, dadurch **gekennzeichnet**, daß die Probe auf Null-Potential und die im Kammerkörper aufgenommene Anode mit einer Durchgangsöffnung auf Hochspannung liegt.

9. Verwendung der Glimmentladungslampe nach einem der Ansprüche 1 bis 8 in der Atomabsorptions-Spektroskopie AAS, dem optischen emissionsspektroskopischen Verfahren OES, der Atomfluoreszenz-Spektroskopie AFS sowie dem optogalvanischen Verfahren LEI.

## Claims

1. Glow-discharge lamp comprising a chamber body of insulating material, which is provided with one or several gas supply and vacuum extraction opening(s), which includes a gas chamber flaring in the direction toward the anode and laterally limited by the inner walls of the chamber body, with the longest diameter of the chamber being located at the anode level approximately while its smallest diameter corresponds to the section of the sample to be analysed, and including a sample disposed at the cathode end of the chamber body, and an anode received in said chamber body, as well as a closure element disposed at one end of said chamber body and possibly configured as observation window,

    **characterized** by the combination of the following features:

    - at least one window opening (18) for an additional observation window is provided laterally in said chamber body (4) approximately at the level of the negative glow,
    - the sample (2) sealing closes the inner gas volume at the cathode end,
    - said chamber body (4) is provided with a possibly closable first gas supply line (5) in the zone of the negative glow in the vicinity of the sample and directly passing along the window opening (18) provided there, and
    - said chamber body (4) is provided with a vacuum line (6) above said gas supply line (5).

2. Glow-discharge lamp according to Claim 1, **characterized** in that a second, possibly closable, gas supply line (7) is provided between said first gas supply line (5) and the anode (8) embedded in said chamber body (4) therebelow, and that a third, possibly closable, gas supply line (11) is provided between said anode (8) and said closure element (12).

3. Glow-discharge lamp according to Claim 1 or 2,
    **characterized** in that said closure element (12) comprises a possibly closable connector line for vacuum or gas supply.

4. Glow-discharge lamp according to any of Claims 1 to 3,
    **characterized** in that said sample (2) is disposed at a cathode element (3) joining said chamber body (4).

5. Glow-discharge lamp according to Claim 4, **characterized** in that a possibly exchangeable insert (15) made of non-conductive material, which has an inner opening corresponding to the sample section to be studied, is disposed in the passage of said cathode element (3), with the inner opening of said insert (15) being optionally selectable to be round, rectangular, orthogonal, provided with rounded corners, elliptical or of a similar shape.

6. Glow-discharge lamp according to any of Claims 1 to 5,
    **characterized** in that said anode (8) is shielded from said inner gas volume (GR) by a partitioning (21).

7. Glow-discharge lamp according to Claim 5, **characterized** in that a disk element (16) of non-conductive material, having a gas supply opening (17), is inserted into said insert (15).

8. Glow-discharge lamp according to any of Claims 1 to 8,
    **characterized** in that a zero potential is applied to said sample and that high voltage is applied to the anode which is received in said chamber body and is provided with a passage.

9. Application of the glow-discharge lamp according to any of Claims 1 to 8 in atomic absorption spectroscopy AAS, the optical emission spectroscopic method OES, the atomic fluorometric spectroscopy AFS, as well as in the opto-galvanic method LEI.

## Revendications

1. Lampe à décharge luminescente comprenant un corps de chambre à une ou plusieurs ouvertures d'amenée de gaz et d'aspiration à vide en un matériau isolant, comprenant une chambre du gaz qui s'élargit vers l'anode et présente le plus grand diamètre au niveau de l'anode environ pendant que son plus petit diamètre correspond à la partie étudiée de l'éprouvette à analyser, et comprenant une éprouvette disposée à l'extrémité de cathode du corps de chambre et une anode renfermée dans ledit corps de chambre, ainsi qu'un élément de fermeture disposé à l'extrémité dudit corps de chambre, qui est configuré, le cas échéant, comme une fenêtre d'observation,
    **caractérisé** par la combinaison des caractéristiques suivantes:

    - au moins une ouverture de fenêtre (18) est prévue pour une fenêtre d'observation additionnelle, qui est disposée latéralement dans ledit corps de chambre (4) environ au niveau de la lueur de décharge négative,

- l'éprouvette (2) ferme la chambre du gaz intérieure de façon étanche à l'extrémité de cathode,
- le corps de chambre (4) comprend une première amenée de gaz (5) dans la zone de la lueur de décharge négative, directement passante et obturable, le cas échéant, au voisinage de l'éprouvette et de l'ouverture de fenêtre (18)
- le corps de chambre (4) comprend une conduite à vide (6) au dessus de ladite amenée de gaz (5).

2.  Lampe à décharge luminescente selon la revendication 1,
    **caractérisé** en ce qu'une deuxième amenée de gaz (7) obturable, le cas échéant, est disposée entre ladite première amenée de gaz (5) et au dessous de l'anode (8) encastrée dans ledit corps de chambre (4), et en ce qu'elle comprend une troisième amenée de gaz (11) obturable, le cas échéant, qui est disposée entre ladite anode (8) et un élément de fermeture (12).

3.  Lampe à décharge luminescente selon la revendication 1 ou 2,
    **caractérisé** en ce que ledit élément de fermeture (12) comprend une conduite de raccordement obturable, le cas échéant, pour le vide ou l'alimentation en gaz.

4.  Lampe à décharge luminescente selon une quelconque des revendications 1 à 3,
    **caractérisé** en ce que ladite éprouvette (2) est disposée à un élément de cathode (3) qui se raccorde audit corps de chambre (4).

5.  Lampe à décharge luminescente selon la revendication 4,
    **caractérisé** en ce qu'un insert (15) fabriqué d'un matériau non-conducteur et échangeable, le cas échéant, à une ouverture intérieure correspondante à la partie à étudier de l'éprouvette est disposée dans l'ouverture de passage dudit élément de cathode (3), ladite ouverture intérieure dudit insert (15) étant ronde, rectangulaire, orthogonale, aux coins arrondis, elliptique ou de forme similaire à choix.

6.  Lampe à décharge luminescente selon une quelconque des revendications 1 à 5,
    **caractérisé** en ce qu'un ladite anode (8) est blindée et isolée de ladite chambre du gaz intérieur (GR) au moyen d'une cloison (21).

7.  Lampe à décharge luminescente selon la revendication 5,
    **caractérisé** en ce qu'un élément à disque (16) en un matériau non-conducteur, qui comprend une ouverture d'alimentation en gaz (17), est inséré dans ledit insert (15).

8.  Lampe à décharge luminescente selon une quelconque des revendications 1 à 7,
    **caractérisé** en ce que ladite éprouvette est portée au potentiel zéro pendant que l'anode renfermée dans ledit corps de chambre, qui présente une ouverture de passage, est portée à haute tension.

9.  Emploi de la lampe à décharge luminescente selon une quelconque des revendications 1 à 8, dans la spectroscopie à absorption atomique AAS, dans le procédé optique par spectroscopie d'émissions OES, dans la spectroscopie à fluorescence atomique AFS, ainsi que dans le procédé opto-galvanique LEI.

End-on

13

12

9

4

8

7

6

4

5

3

2

10

1

11

20

Side-on

18

6'

FIG. 1

Einstrahlung
bzw. Beobachtung

Einstrahlung

Beobachtung

15

FIG. 2

15 —

10 —

17 —

3

15

16    15

**FIG. 3**

14

Fenster

GR.

21

**FIG. 4**